# EUROPÄISCHE PATENTSCHRIFT

(11) **EP 0 447 356 B1**
(45) Veröffentlichungstag und Bekanntmachung des Hinweises auf die Patenterteilung: **08.11.1995**
(21) Anmeldenummer: 91810121.3
(22) Anmeldetag: 25.02.1991
(51) Int. Cl.: B29C 69/00, B29B 11/04, A63C 5/12

(54) **Verfahren und Verwendung von Kunststoff Folien zum Herstellen eines Skibelags und Skibelag**
Process and use of plastic sheets for the production of a ski-sole coating and ski-sole coating obtained
Procédé et utilisation de feuilles de matière plastique pour la fabrication d'une semelle de ski et semelle de ski obtenue

(30) Priorität: 02.03.1990 CH 661/90
(43) Veröffentlichungstag der Anmeldung: 18.09.1991
(73) Patentinhaber: IMS KUNSTSTOFF AG, CH-3063 Ittigen-Bern (CH)
(72) Erfinder: Pennekamp, Günther, W-4425 Vreden (DE)
(74) Vertreter: Hepp, Dieter

(56) Entgegenhaltungen:
- CH-A- 649 573
- DE-A- 1 704 512
- DE-A- 1 929 249
- DE-A- 2 141 248
- FR-A- 1 392 190
- PATENT ABSTRACTS OF JAPAN, Band 7, Nr. 183 (M-235)[1328], 12. August 1983; & JP-A-58 84 722 (MATSUSHITA DENKO K.K.) 20-05-1983

## Beschreibung

Die Erfindung betrifft ein verfahren zum Herstellen eines Skibelags gemäss Anspruch 1, die Verwendung von Kunststoff-Folien gemäss Anspruch 10 und einen Skibelag aus gesintertem Kunststoff gemäss Anspruch 14.

Gesintete Skibeläge sind seit langem Stand der Technik. Zur Herstellung wird dabei meist in einem ersten Schritt ein Kunststoffpulver in einer meist geheizten Presse bei einem Druck von ca. 20 bis 50 bar und bei einer an das verwendete Kunststoffmaterial angepassten Aufschmelz-Temperatur plastifiziert. Das dabei eingesetzte Werkzeug weist meist eine Matrize und eine Patrize auf. Beim Verpressen entstehen während einer Heizzeit/Sinterzeit von meist einigen Stunden (z.B. 7-8 Stunden bei Hostalen GUR) Sinterblöcke oder Rohlinge der gewünschten Dimension. Häufig wird nach dem Plastifizieren noch ein Kühlvorgang mit einer Drucksteigerung (z.B. auf 100 bar) eingelegt. Diese Art der Verpressung bei hohen Temperaturen wird als Sintern bezeichnet.

Bei den bekannten, z.B. in der CH-A-649,573 beschriebenen verfahren werden die gesinterten Blöcke dann durch Schälen aufgetrennt, so dass ein kontinuierliches Band entsteht. Dieses kann dann weiterverarbeitet und als Belagsschicht mit der Unterseite des Skis verbunden werden.

Im Hinblick auf die Laufeigenschaften von Skibelägen hat es sich gezeigt, dass Beläge mit Oberflächen-Eigenschaften, die über die Lauffläche variieren gewisse Vorteile aufweisen können. Absolut gleichmässige Oberflächen scheinen anisotropen Oberflächen unterlegen zu sein. Dies wird vor allem damit erklärt, dass der beim Gleitvorgang durch die Reibungswärme erzeugte Wasserfilm sich bei unregelmässigen Oberflächen nicht laminar über die Lauffläche verteilt (dies würde zu einem Saugeffekt führen), sondern dass durch unterschiedliche Microstrukturen sogenannte turbulente Fliesseigenschaften bewirkt werden.

Es hat sich auch gezeigt, dass vor allem bei ultrahochmelukularen Werkstoffen, (wie ultrahochmolekularem Polyäthylen UHMW PE) die Laufeigenschaften eines Skibelags dadurch verbessert werden können, dass ein mehrfaches, z.B. ein zweifaches Sinterverfahren angewandt wird: Dabei wird z.B. UHMW gesintert, der gewonnene Sinterblock wieder zu Granulaten zerkleinert und die Granulate sodann zum zweiten Mal entweder alleine oder unter Zugabe von ungesintertem Kunststoffpulver gesintert.

Diese zweifache Sinterung verbessert vor allem die Ahriebsfestigkeit, die Gleitfreudigkeit des Belags im unteren Geschwindigkeitsbereich und die Fähigkeit zur Wachsaufnahme.

Derartige Verfahren zum "zweifachen Sintern" des Kunststoffs sind jedoch aufwendig, weil der Kunststoff nach dem ersten Sintern wieder vollständig granuliert werden muss.

Aus der DE-OS-1,929,249 ist ein Verfahren zum Herstellen eines plattenförmigen Fussbodenbelags bekannt. Dabei werden elektrisch leitfähige Kunststoffplatten durch flächiges Verpressen getrennter Schichten erzeugt. Dabei handelt es sich um eine Laminiertechnik, die weder in dieser noch in abgewandelter Form für die Herstellung von Skibelägen eingesetzt werden kann.

Aus der DE-OS-1,704,512 ist ein weiteres Verfahren zur Herstellung von Tafeln aus thermoplastischen Kunststoffen bekannt. Auch dabei handelt es sich um ein Laminier-Verfahren, bei dem unterschiedliche Kunststoff-Pulver-Schüttungen zwischen separaten Pressblechen in einer Etagenpresse zu Laminaten verarbeitet werden. Auch dieses Verfahren gibt weder einen Hinweis auf den Gegenstand der Erfindung noch lässt sie sich in dieser Form zur Herstellung der erfindungsgemässen Skibeläge einsetzen.

Der Erfindung liegt die Aufgabe zugrunde, die Nachteile des Bekannten zu vermeiden, insbesondere also ein Verfahren zur Herstellung eines Skibelags und einen Skibelag zu schaffen der hinsichtlich seiner Eigenschaften, insbesondere der Wachsaufnahme, der Abriebfestigkeit und der Gleitfreudigkeit verbessert ist und der zudem ohne übermässigen Aufwand wirtschaftlich herstellbar ist.

Erfindungsgemäss wird dies in erster Linie dadurch erreicht, dass mehrere Lagen geschichteter oder gerollter Folien unter Druck und Wärmezufuhr gesintert werden. Im Gegensatz zu bekannten Verfahren ist das Ausgangsmaterial des Sinterverfahrens zur Herstellung des Rohlings, der durch Auftrennen zu Belagsbahnen verarbeitet werden soll, nicht Kunststoffpulver oder Granulat sondern Kunststoff in Form von mehrlagig geschichteten oder gerollten Folien. Die Folien selbst können z.B. auch im Extrusionsverfahren mit hochmolekularem Kunststoff hergestellt werden. Besonders gute Ergebnisse lassen sich erreichen, wenn die Folien Ergebnis eines vorgeschalteten Sinterprozesses sind und selbst durch Schälen oder anderweitiges Trennen erzeugt wurden.

Als Ausgangsmaterial kann selbstverständlich wieder wie bei bekannten Verfahren Kunststoffpulver (z.B. durch Fällung hergestellt) oder Kunststoffgranulat (z.B. durch Mahlen oder Zerhacken hergestellt) sein.

Die Folien können alleine oder mit dazwischen eingebrachtem Kunststoff-Pulver oder Kunststoff-Granulat gesintert werden. Durch den Zusatz von Kunststoff-Pulver oder -Granulat lässt sich die Erfindung vor allem in wirtschaftlicher Hinsicht weiter verbessern.

Besonders einfach lassen sich die Folien mehrlagig aufschichten, wenn sie zu einem Wickelkörper aufgerollt werden. Dabei können z.B. zwei oder mehrere Folien - vorzugsweise aus verschiedenem Material und/oder in verschiedener Dicke und/oder mit anderweitig verschiedenen physikalischen Eigenschaften, z.B. durch Beigabe verschiedener Additive - gleichzeitig aufgerollt werden. Der zylindrische Wickelkörper kann dann in bekannte Sinterformen eingebracht und unter Wärmezufuhr verpresst werden.

Durch die Verwendung von Folien lassen sich eine Vielzahl von Vorteilen auf optimal einfache Weise gleichzeitig verwirklichen: Durch entsprechende Wahl der Folien (Material, Dicke, Eigenschaften) und entsprechende Anpassung des Auftrenn-Verfahrens kann auf kontrollierte und vorherbestimmbare Weise eine Belagsbahn erzeugt werden, auf deren Oberfläche die Materialien der verschiedenen Folien abwechseln. Dies lässt sich z.B. erreichen, indem der Rohling bei der Erzeugung der Belagsbahnen nicht parallel zu den Folien aufgetrennt oder geschält wird sondern in einem solchen Winkel, dass im querschnitt verschiedene Folienbahnen geschnitten und damit an die spätere Oberfläche der Belagsbahn gebracht werden. Besonders einfach lässt sich dies dadurch erreichen, dass beim Sintern der Folien derart Druck aufgebracht wird, dass der Verlauf der Folien im Sinterblock nicht parallel oder konzentrisch sondern gewellt ist. Wird dann z.B. beim Schälen der Block geschnitten ergibt sich eine kontrollierte Zufallsmischung der Belagsstrukturen auf der Oberfläche, die durch den Grad der Verformung beim Sintern, die Dicke der eingesetzten Folien und die Dicke der Belagsbahn bestimmt wird.

Selbstverständlich lässt sich eine solche Belagsbahn nicht nur durch Schälen sondern auch auf andere Weise, wie z.B. durch Schneiden mit Lasern oder andere mechanische Trennverfahren herstellen. Dabei lassen sich auch Folien mit mehreren verschiedenen Materialien verwenden. Wenn die beim Sintern entstehende Welligkeit des Folienverbands relativ gross ist, ist es vorteilhaft, wenn die Schichtdicke der verwendeten Folien gleich oder grösser ist als die Schichtdicke des Skibelags. Auf diese Weise wird sichergestellt, dass auch bei grösseren Abweichungen immer ausreichend grosse Flächen des gleichen Folienmaterials zusammenhängend aufgetrennt werden und die Oberfläche des Belags bilden.

Unter wirtschaftlichen Gesichtspunkten kann es auch Vorteil sein, extrudierte Folien und im Sinterverfahren hergestellte Folien abwechselnd zu schichten und dann zu versintern.

Die Erfindung ist im folgenden in Ausführungsbeispielen anhand der Zeichnungen näher erläutert. Es zeigen:
- Fig.1: die Herstellung von zwei verschiedenen Kunststoff-Folien aus Sinterblöcken in schematischer Darstellung,
- Fig.2: die beiden gemäss Figur 1 hergestellten Folien in aufgerolltem Zustand,
- Fig.3: die schematische Darstellung einer Sinterpresse, in welcher die Folien-Rolle gemäss Figur 2 eingelegt ist vor dem Verpressen,
- Fig.4: den gemäss Figur 3 hergestellten Sinter-Block beim Schälen,
- Fig.5: einen Skibelag, wie er beim Verfahren gemäss Figur 4 entstanden ist,
- Fig.6: einen Sinterrohling mit etwa parallel geschichteten Folien-Strukturen,
- Fig.7: eine vom Block gemäss Figur 6 getrennte Belagsbahn,
- Fig.8: eine Belagsbahn, die aus einem in Längsrichtung geschichteten Block geschnitten wurde,
- Fig.9: die schematische Darstellung eines Wickelvorgangs mit drei Folien,
- Fig.10: den Ausschnitt aus einem Sinterblock mit Plastikfolien mit gewelltem Profil,
- Fig.11: die schematische Darstellung eines Sinterblocks, der aus Folie und Kunststoff-Pulver hergestellt ist und
- Fig.12: die schematische Darstellung eines Sinterblocks, der aus zwei Folien und Kunststoff-Granulat hergestellt ist.

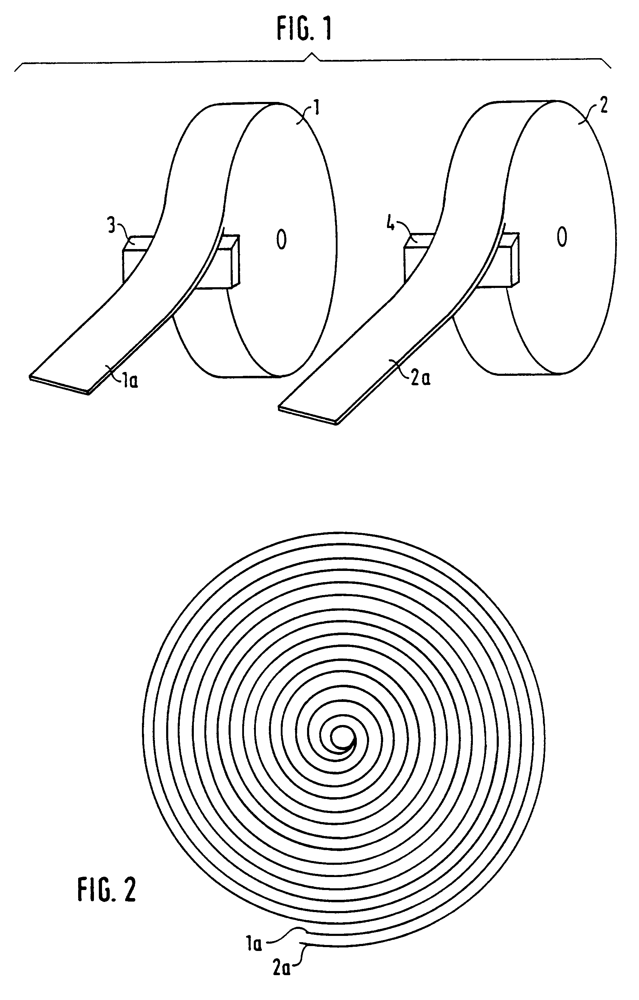

Figur 1 zeigt zwei Sinter-Blöcke 1 und 2, die in bekannter Weise mittels Messern 3 und 4 geschält werden. Die Sinter-Blöcke 1 und 2 sind aus ultrahochmolekularem Polyäthylen in einer Sinterpresse hergestellt. Die Molekularmasse von Block 1 beträgt ca. 6,5 x 10⁶ gr/mol. Seine Dichte beträgt ca. 0,95 gr/cm³. Die Molekularmasse des Blocks 2 beträgt ca. 3 x 10⁶ gr/mol und seine Dichte beträgt ca. 0,92 gr/cm³.

Um die später noch zu beschreibende Strukturbildung sichtbar zu machen, ist der Block 1 schwarz eingefärbt und der Block 2 weiss eingefärbt.

Figur 2 zeigt schematisch, wie die beiden Folien 1a und 2a, die von den Blöcken 1 und 2 abgeschält wurden zusammen aufgerollt wurden. Dabei wechselt sich also immer eine Lage der Folie 1a mit einer Lage der Folie 2a ab.

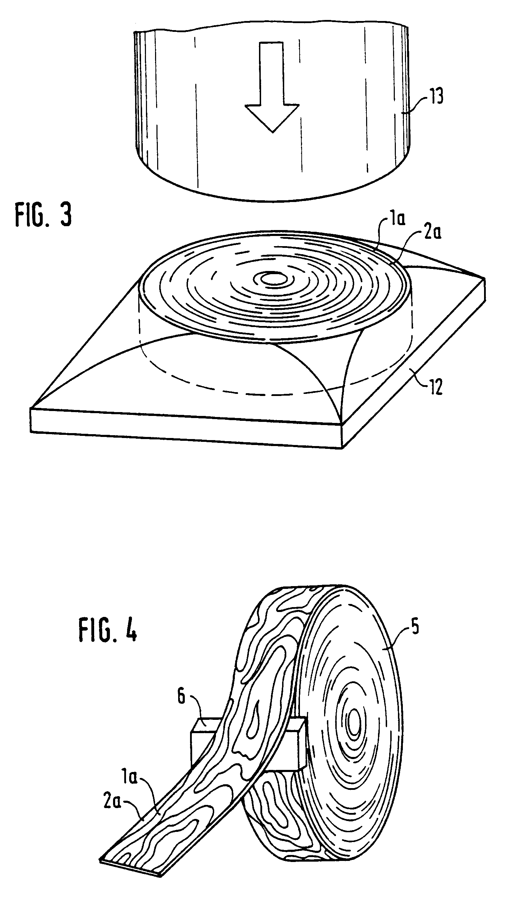

Figur 3 zeigt den zylindrischen Wickelkörper aus den Folien 1a und 2a in einer Matrize 12, in der die gewickelten Kunststoff-Folien 1a, 2a durch eine Matrize 13 unter Druck gesetzt und gesintert werden können.

Beim Sintervorgang werden die Folien-Bänder 1a, 2a quergestaucht und gewellt, so dass ein Sinterkörper mit inhomogenem Verlauf entsteht.

Figur 4 zeigt den derart hergestellten Sinter-Block 5 bei einem weiteren Schälvorgang. Ersichtlicherweise schneidet das Schälmesser 6 dabei unregelmässig aber statistisch vorhersehbar abwechselnd durch die verschiedenen gewellten, homogen aneinander gesinterten Schichten 1a und 2a, so dass eine rindenartige Struktur der geschälten Belagsbahn entsteht.

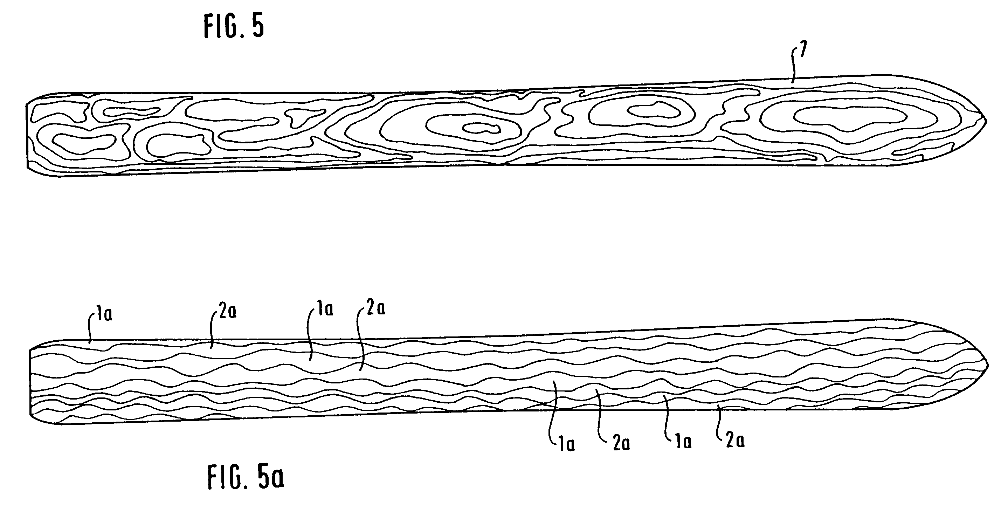

Figur 5 zeigt die Unteransicht eines fertigen Skibelags, wie er aus einer Belagsbahn 7 gemäss Figur 4 hergestellt wurde. Die Oberfläche ist dabei unterteilt in Einzelflächen mit verschiedenen Materialeigenschaften und verschiedener Farbe. Diese Inhomogenität der Belagsoberfläche bewirkt besonders gute und kontrollierbare Turbulenzen des Wasserfilms zwischen Ski- und Schnee-Unterlage. Ausserdem lassen sich die Wachsaufnahme, die Abriebeigenschaften und die Gleiteigenschaften generell besonders vorteilhaft und kontrollierbar beeinflussen.

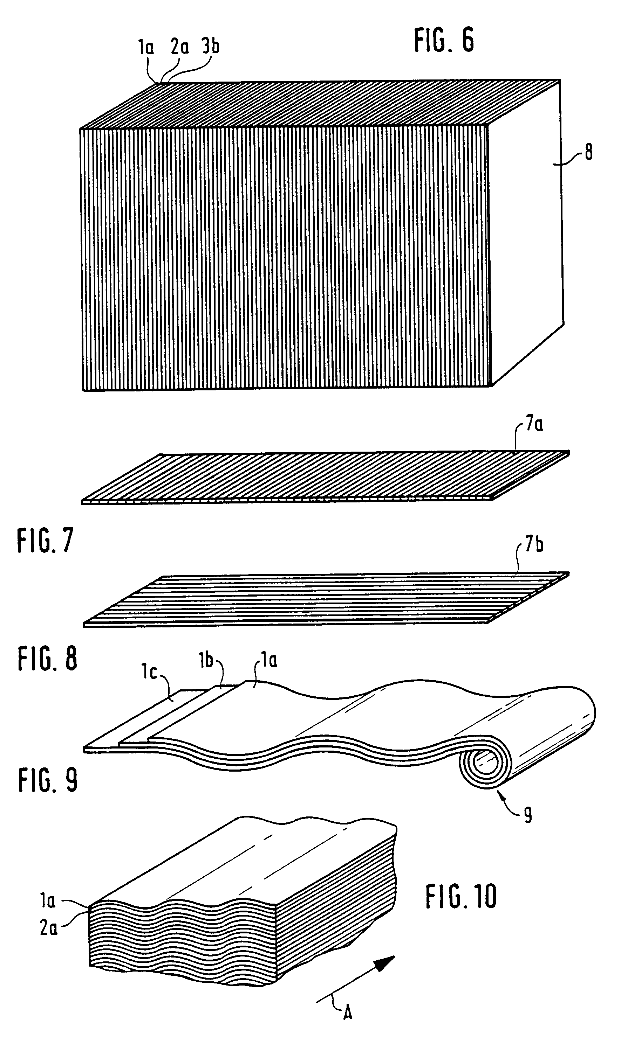

Figur 6 zeigt ein Ausführungsbeispiel, bei welchem ein im Querschnitt rechteckiger Sinterblock 8 in einer entsprechend geformten Sinterpresse erzeugt wurde. Der Block 8 besteht aus verschiedenen Schichten von Kunststoff-Folien, wobei die Folien-Schicht 1a und 2a im Sinterprozess analog Figur 1 hergestellt wurde, während die Folie 3b eine Extrusionsfolie ist.

Figur 7 zeigt eine Belagsbahn 7a, die durch Auftrennen des Sinterblocks 8 gemäss Figur 6 quer zur Folienlaufrichtung erzeugt wurde.

Figur 8 zeigt ein Ausführungsbeispiel einer Belagsbahn 7b, die durch Auftrennen eines Rohlings mit parallel geschichteten Folien erzeugt wurde, so dass die Trennlinien in Längsrichtung der Belagsbahn verlaufen.

Figur 9 zeigt ein Ausführungsbeispiel, bei dem drei im Extrusionsverfahren hergestellte Folien derart co-extrudiert wurden, dass die Folienschicht unmittelbar miteinander verbunden und zu einem zylindrischen Wickelkörper 9 aufgewickelt werden können, der sodann analog dem Ausführungsbeispiel gemäss Figur 3 gesintert werden kann. Dieses Verfahren zeichnet sich besonders durch rationelle Fertigungsweise aus.

Figur 10 zeigt ein Ausführungsbeispiel, bei welchem die Folienschichten 1a, 2a in Längsrichtung gewellt sind. Diese Vorformung der Folien 1a, 2a lässt sich durch entsprechende Ausbildung des Schälmessers oder durch entsprechende Ausbildung der Düse beim Extrudieren erreichen. Selbstverständlich können die Folien auch nach dem Herstellen und vor dem Zusammenführen und versintern verpresst werden um die dargestellte Wellenform zu erreichen. Wird ein Rohling gemäss Figur 10 (der analog dem Ausführungsbeispiel gemäss Figur 1 auch gewickelt sein kann) durch ein geradliniges Messer in Richtung des Pfeils A geschält, dann ergibt sich eine in Längsrichtung des Skis verlaufende Struktur, bei der abwechselnd Material der Folie 1a und Folie 2a die Oberfläche des Belags bildet (Figur 5a). Auf diese Weise lässt sich die gewünschte "kontrollierte" Unregelmässigkeit der Oberfläche besonders gut steuern. Selbstverständlich lassen sich auch mehrere Folien, z.B. vier oder fünf auf die beschriebene Weise abwechselnd schichten, wobei durch entsprechende Dimensionierung der Schichtdicke und Irregularität des Folienverlaufs bestimmt werden kann, in welchem Prozentsatz oder in welchen Prozentsätzen jede der Folien im Mittelwert zur Oberflächenbildung beiträgt.

Die Möglichkeit die verschiedenen Folien-Schichten unterschiedlich einzufärben oder auch transparente Folien mit gefärbten Folien zu mischen, führt ausserdem zu besonders attraktivem Aussehen des Skibelags.

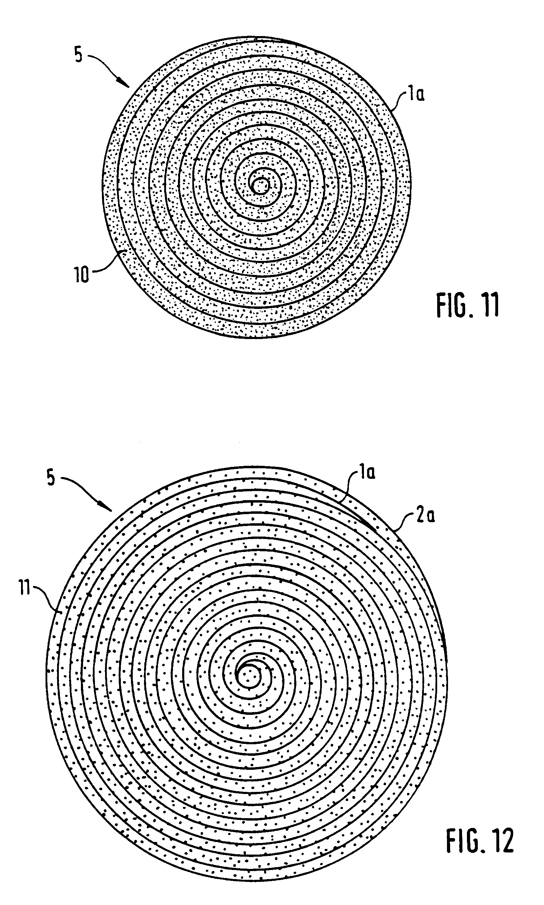

Figur 11 zeigt die schematische Ansicht eines Sinterblocks 5, der aus einem endlosen Folien-Band 1a gewickelt ist. Das Folienband 1a ist dabei derart locker gewickelt, dass im Zwischenraum zwischen jeweils zwei benachbarten Bändern ein Kunststoff-Pulver 10 eingebracht werden konnte, das sich beim Sintern homogen mit dem Folienband 1 verbindet. Der schematisch dargestellte Sinterblock besteht also aus abwechselnden Schichten eines nur einmal (nämlich beim Sintern des Blocks 5) gesinterten Kunststoff-Pulver das die spiralförmig verlaufenden Zwischenräume zwischen jeweils benachbarten Gängen des Folienbands 1a ausfüllt und dem Folienband 1a selbst. Selbstverständlich ist die Darstellung in Figur 11 nur schematisch; vor allem wird beim Sintern das Kunststoff-Pulver 10 und die Folie 1a derart homogen zum Block 5 verbunden, dass sich die in Figur 11 dargestellte Struktur beim gesinterten Block nur mehr dann ausgeprägt zeigt, wenn das Kunststoff-Pulver 10 anders eingefärbt ist, als das Folienband 1a. Selbstverständlich kann statt des gesinterten Folienbands 1a auch ein extrudiertes Folienband eingesetzt werden, sofern der Anwendungsfall dies erlaubt.

Im Ausführungsbeispiel gemäss Figur 12 sind zwei Folienbänder 1a, 2a analog dem Ausführungsbeispiel gemäss Figur 2 aufgewickelt. In die spiralförmig verlaufenden Zwischenräume zwischen die Folienbänder 1a und 2a sind analog dem Ausführungsbeispiel gemäss Figur 11 Kunststoff-Granulate 11 eingesintert. Der Sinterblock 5 gemäss diesem Ausführungsbeispiel besteht also aus drei verschiedenen Materialien, nämlich den Kunststoff-Granulaten 11, dem Folienband 1a und dem Folienband 2a. Die Erfindung erlaubt damit auf optimal einfache Weise die Kombination einer grossen Vielzahl von Materialien entsprechend dem jeweiligen Anwendungsfall.

## Patentansprüche

1. Verfahren zum Herstellen eines Skibelags (7) bei welchem Kunststoff zu einem Rohling oder Block (5, 8) gesintert und der gesinterte Block durch Auftrennen, insbesondere durch Schälen, in Belagsbahnen aufgeteilt wird, dadurch gekennzeichnet, dass wenigstens ein Teil des Kunststoffs in Form mehrlagig geschichteter oder gerollter Folien (1a, 1b, 1c, 2a, 3b) unter Druck und Wärmezufuhr gesintert wird.

2. Verfahren nach Anspruch 1, dadurch gekennzeichnet, dass wenigstens ein Teil der geschichteten Folien (1a, 2a) gesintertes Material ist.

3. Verfahren nach Anspruch 1 oder 2, dadurch gekennzeichnet, dass Folien (1a, 2a) mit unterschiedlichen Materialeigenschaften gesintert werden.

4. Verfahren nach einem der vorangehenden Ansprüche, dadurch gekennzeichnet, dass wenigstens ein Teil der Folien (3b) im Extrusionsverfahren hergestellt ist.

5. Verfahren nach einem der vorangegangenen Ansprüche, dadurch gekennzeichnet, dass die Folien (1a, 2a) aus unterschiedlichem Material bestehen.

6. Verfahren nach einem der vorangegangenen Ansprüche, dadurch gekennzeichnet, dass Folien (1a, 1b, 1c) mit unterschiedlicher Dicke geschichtet oder gerollt werden.

7. Verfahren nach einem der vorangegangenen Ansprüche, dadurch gekennzeichnet, dass wenigstens eine der Folien (1a, 2a) eine Schichtdicke aufweist, die gleich oder grösser ist als die Schichdicke des Skibelags (7).

8. Verfahren nach einem der vorangegangenen Ansprüche, dadurch gekennzeichnet, dass wenigstens eine Folie (1a, 2a) mit dazwischen eingebrachtem Kunststoff-Granulat (10) und/oder Kunststoff-Pulver (11) gesintert wird.

9. Verfahren zum Herstellen eines Skibelags nach Anspruch 1, dadurch gekennzeichnet, dass die Folien (1a, 2a) aus einem Sinterkörper (1, 2, 8) durch Auftrennen, insbesondere durch Schälen hergestellt werden, und dass wenigstens eine der Folien (1a, 2a) mehrlagig geschichtet oder gerollt und zum Körper (5) gesintert wird, der sodann zu einer Belagsbahn aufgetrennt wird.

10. Verwendung von Kunststoff-Folien als Ausgangsmaterial zum Sintern von Rohlingen oder Blöcken für die Herstellung von Skibelägen.

11. Verwendung nach Anspruch 10, wobei wenigstens ein Teil der Folien im Sinterverfahren hergestellt ist.

12. Verwendung nach Anspruch 10, wobei wenigstens ein Teil der Folien im Extrusionsverfahren hergestellt ist.

13. Verwendung von Kunststoff-Folien nach einem der Ansprüche 10 bis 12 gemeinsam mit schichtenweise zwischen die Folien eingebrachtem Kunststoff-Pulver oder Kunststoff-Granulat zum Sintern von Rohlingen oder Blöcken für die Herstellung von Skibelägen.

14. Skibelag aus gesintertem Kunststoff, insbesondere hergestellt nach einem Verfahren gemäss einem der vorangegangenen Ansprüche, dadurch gekennzeichnet, dass der Belag (7) aus zusammengesinterten Kunststoff-Folien (1a, 1b, 1c, 2a, 3b) besteht.

15. Skibelag nach Anspruch 14, dadurch gekennzeichnet, dass wenigstens zwei Kunststoff-Folien derart unregelmässig in der Belagsbahn verlaufen, dass die Oberfläche der Belagsbahn abwechselnd durch das Material der verschiedenen Folien gebildet wird.

## Claims

1. Method of manufacturing a ski coating (7) wherein plastic is sintered to a blank or block (5, 8) and the sintered block is divided up into coating strips through separation, in particular through pealing, characterized in that at least a portion of the plastic is sintered in the form of multi-layered or rolled foils (1a, 1b, 1c, 2a, 3b) under pressure and the application of heat.

2. Method according to claim 1, characterized in that at least a portion of the layered foils (1a, 2a) is sintered material.

3. Method according to claims 1 or 2, characterized in that the foils (1a, 2a) are sintered with varying material properties.

4. Method according to one of the preceding claims, characterized in that at least a portion of the foils (3b) is manufactured by means of the extrusion method.

5. Method according to one of the preceding claims, characterized in that the foils (1a, 2a) comprise different materials.

6. Method according to one of the preceding claims, characterized in that foils (1a, 1b, 1c) with varying thicknesses are layered or rolled.

7. Method according to one of the preceding claims characterized in that at least one of the foils (1a, 2a) possesses a layer thickness which is equal to or greater than the thickness of the ski coating (7).

8. Method according to one of the preceding claims, characterized in that at least one foil (1a, 2a) is sintered with plastic granules (10) and/or plastic powder (11) introduced between.

9. Method of manufacturing a ski coating according to claim 1, characterized in that the foils (1a, 2a) are manufactured from one sintered body (1, 2, 8) by means of dividing up, in particular by means of pealing, and that at least one of the foils (1a, 2a) in layered or rolled in multi-layers and is sintered to a body (5), said body then being divided up into coating strip.

10. Use of plastic foils as the initial material for sintering of blanks or blocks for the manufacture of ski coatings.

11. Use according to claim 10, at least a portion of the foils being manufactured by means of the sintering method.

12. Use according to claim 10, at least a portion of the foils being manufactured by means of the extrusion method.

13. Use of plastic foils according to claims 10 to 12 together with plastic powder or plastic granulate introduced in layers between the foils for sintering to blanks or blocks for the manufacture of ski coatings.

14. Ski coating of sintered plastic, in particular manufactured according to a method according to one of the preceding claims, characterized in that the coating (7) comprises plastic foils (1a, 1b, 1c, 2a, 3b) which have been sintered together.

15. Ski coating according to claim 14, characterized in that at least two plastic foils run irregularly within the coating strip in such a way that the surface of the coating strip is alternately formed by the material of the different foils.

## Revendications

1. Procédé de fabrication d'une semelle de ski (7), selon lequel une matière plastique est sintérisée en une galette ou un bloc (5, 8) et le bloc sintérisé est subdivisé en bandes de semelles par détachement, en particulier par décolletage, caractérisé en ce qu'au moins une partie de la matière plastique est sintérisée sous pression et avec apport de chaleur, sous forme de feuilles (1a, 1b, 1c, 2a, 3b) superposées ou roulées en plusieurs couches.

2. Procédé selon la revendication 1, caractérisé en ce qu'au moins une partie des feuilles superposées (1a, 2a) est de la matière sintérisée.

3. Procédé selon la revendication 1 ou 2, caractérisé en ce que des feuilles (1a, 2a) sont sintérisées avec des propriétés différentes de leur matière.

4. Procédé selon l'une des revendications précédentes, caractérisé en ce qu'au moins une partie des feuilles (3b) est produite dans un procédé d'extrusion.

5. Procédé selon l'une des revendications précédentes, caractérisé en ce que les feuilles (1a, 2a) sont constituées de matières différentes.

6. Procédé selon l'une des revendications précédentes, caractérisé en ce que des feuilles (1a, 1b, 1c) d'épaisseurs différentes sont superposées ou roulées.

7. Procédé selon l'une des revendications précédentes, caractérisé en ce qu'au moins l'une des feuilles (1a, 2a) présente une épaisseur de couche, qui est égale ou supérieure à l'épaisseur de couche de la semelle de ski (7).

8. Procédé selon l'une des revendications précédentes, caractérisé en ce qu'au moins une feuille (1a, 2a) est sintérisée avec introduction de granulés de matière plastique (10) et/ou de poudre de matière plastique (11).

9. Procédé de fabrication d'une semelle de ski selon la revendication 1, caractérisé en ce que les feuilles (1a, 2a) sont produites par détachement, en particulier par décolletage, à partir d'un corps sintérisé (1, 2, 8), et en ce qu'au moins l'une des feuilles (1a, 2a) est mise en stratifié ou roulée, en plusieurs couches, et est sintérisée sous la forme du corps (5) dont on détache ensuite une bande de semelles.

10. Utilisation de feuilles de matière plastique comme matériau de départ pour la sintérisation de galettes ou de blocs pour la fabrication de semelles de ski.

11. Utilisation selon la revendication 10, selon laquelle au moins une partie des feuilles est produite dans un procédé de sintérisation.

12. Utilisation selon la revendication 10, selon laquelle au moins une partie des feuilles est produite dans un procédé d'extrusion.

13. Utilisation de feuilles de matière plastique selon l'une des revendications 10 à 12, conjointement avec de la poudre de matière plastique ou des granulés de matière plastique, introduits en couches entre les feuilles, pour la sintérisation de galettes ou de blocs pour la fabrication de semelles de ski.

14. Semelle de ski en matière plastique sintérisée, fabriquée en particulier selon un procédé conforme à l'une des revendications précédentes, caractérisée en ce que la semelle (7) est constituée de feuilles de matière plastique (1a, 1b, 1c, 2a, 3b) réunies par sintérisation.

15. Semelle de ski selon la revendication 14, caractérisée en ce qu'au moins deux feuilles de matière plastique s'étendent de façon irrégulière dans la bande de semelles, de telle sorte que la surface libre de la bande de semelles soit formée en alternance par le matériau des différentes feuilles.
